# FASCICULE DE BREVET EUROPEEN

(11) **EP 3 176 654 B1**
(45) Date de publication et mention de la délivrance du brevet: **01.01.2020**
(21) Numéro de dépôt: 16200066.5
(22) Date de dépôt: 22.11.2016
(51) Int. Cl.: G05B 9/03

(54) **SYSTEME DE SECURITE AUTOMATISE D'UNE INSTALLATION INDUSTRIELLE**
AUTOMATISIERTES SICHERHEITSSYSTEM EINER INDUSTRIELLEN ANLAGE
AUTOMATED SECURITY SYSTEM OF AN INDUSTRIAL PLANT

(30) Priorité: 01.12.2015 FR 1561680
(43) Date de publication de la demande: 07.06.2017
(73) Titulaire: Schneider Electric Industries SAS, 92500 Rueil-Malmaison (FR)
(72) Inventeur: PRUNIER, Michel, 38120 SAINT EGREVE (FR)
(74) Mandataire: Brevalex

(56) Documents cités:
- EP-A1- 1 962 246
- WO-A1-2006/051355
- US-A- 5 984 504

## Description

### DOMAINE TECHNIQUE

L'invention se situe dans le domaine de la sécurité des installations industrielles et concerne plus spécifiquement un système de sécurité automatisé d'une installation industrielle comportant, une pluralité de capteurs destinés à prélever des mesures d'un processus industriel, une pluralité d'actionneurs destinés à exécuter des actions de sécurité qui dépendent de signaux de mesure délivrés par lesdits capteurs, au moins deux chaines de traitement distinctes reliant les capteurs et les actionneurs, et au moins un module de test indépendant desdites chaines de traitement destiné à détecter une défaillance de l'une desdites chaines de traitement.

### ÉTAT DE LA TECHNIQUE ANTÉRIEURE

Pour améliorer la fiabilité et la sécurité des installations industrielles, notamment des installations nucléaires, les systèmes de sécurité comportent généralement deux types d'architecture, soit un système redondant où les fonctions applicatives, prises en charge par un automate programmable par exemple, sont dupliqués pour améliorer la disponibilité des fonctions critiques de sécurité de sorte que si un module d'entrée/sortie ou un processeur échoue, la partie redondante pallie à cette défaillance. A cet effet, ces systèmes comportent généralement deux automates programmables qui assurent ces fonctions critiques et un module de vote utilisé pour sélectionner une seule commande parmi les commandes émises par les automates programmables et pour appliquer la commande sélectionnée à un actionneur.

Un inconvénient des systèmes de sécurité de l'art antérieur provient du fait qu'ils ne protègent pas les installations sous surveillance contre les défaillances dites de modes communs. Ces défaillances affectent simultanément deux chaines de traitements distinctes comportant au moins deux modules de sécurité matériels et/ou logiciels utilisant des technologies redondantes de même nature.

US5984504 décrit un système de sécurité comportant des sous-systèmes redondant formant une première et deuxième chaînes de traitement destinées à assurer une protection d'une installation nucléaire contre des défaillances.

Un but de l'invention est de pallier aux inconvénients de l'art antérieur décrit ci-dessus.

### EXPOSÉ DE L'INVENTION

Ce but est atteint au moyen d'un système compact, peu complexe et peu onéreux permettant d'assurer une redondance partielle pour certaines fonctions clés d'un système automatisé.

Ce système comporte une pluralité de capteurs destinés à prélever des mesures d'un processus industriel, une pluralité d'actionneurs destinés à exécuter des opérations qui dépendent de signaux de mesure délivrés par lesdits capteurs, au moins une première chaine de traitement et au moins une deuxième chaine de traitement reliant les capteurs et les actionneurs, la première chaine de traitement comporte au moins une première unité de traitement mettant en œuvre une première technologie tandis que la deuxième chaine de traitement comporte au moins une deuxième unité de traitement mettant en œuvre une deuxième technologie différente de la première technologie de manière à assurer une redondance partielle d'au moins une fonction critique de sécurité de l'installation industrielle.

Selon l'invention, le système comporte en outre au moins un module de test indépendant des chaines de traitement adapté pour substituer des signaux de test aux signaux de mesures des capteurs et pour comparer les réponses auxdits signaux de test en sortie de chaque unité de traitement à des signaux types préenregistrés.

Préférentiellement, la première unité de traitement est un circuit à relais et/ou un circuit analogique tandis que la deuxième unité de traitement est un automate industriel programmable, un circuit analogique étant un circuit électronique à base de composants analogiques tels qu'amplificateurs opérationnels, transistors, etc...

L'utilisation de deux technologies distinctes dans au moins deux chaines de traitement distinctes permet au système selon l'invention d'assurer une protection de l'installation industrielle contre les défauts dits de mode commun liés aux différentes technologies utilisées.

En outre, du fait que la redondance est partielle et concerne uniquement certaines fonctions critiques de sécurité de l'installation industrielle, il est possible de concevoir un système simple, robuste, peu onéreux et plus compact qu'un système comportant deux automates industriels programmables redondants.

Lesdits signaux de tests sont une représentation de la dynamique de variation des signaux délivrés par les capteurs.

Dans un mode préféré de réalisation, le système selon l'invention comporte un module de décision comportant un module de vote et un module de détection d'incohérence entre les réponses des unités de traitement et, ledit module de vote (16) étant adapté pour sélectionner, en fonction du résultat du module de détection d'incohérence, soit des signaux de mesure délivrés à la sortie de la première unité de traitement, soit des signaux de mesure délivrés à la sortie de la deuxième unité de traitement.

Dans le mode préféré de réalisation du système selon l'invention, la première chaine de traitement comporte un panneau de diagnostic non numérique et la deuxième chaine de traitement comporte un panneau de diagnostic numérique.

### BRÈVE DESCRIPTION DES DESSINS

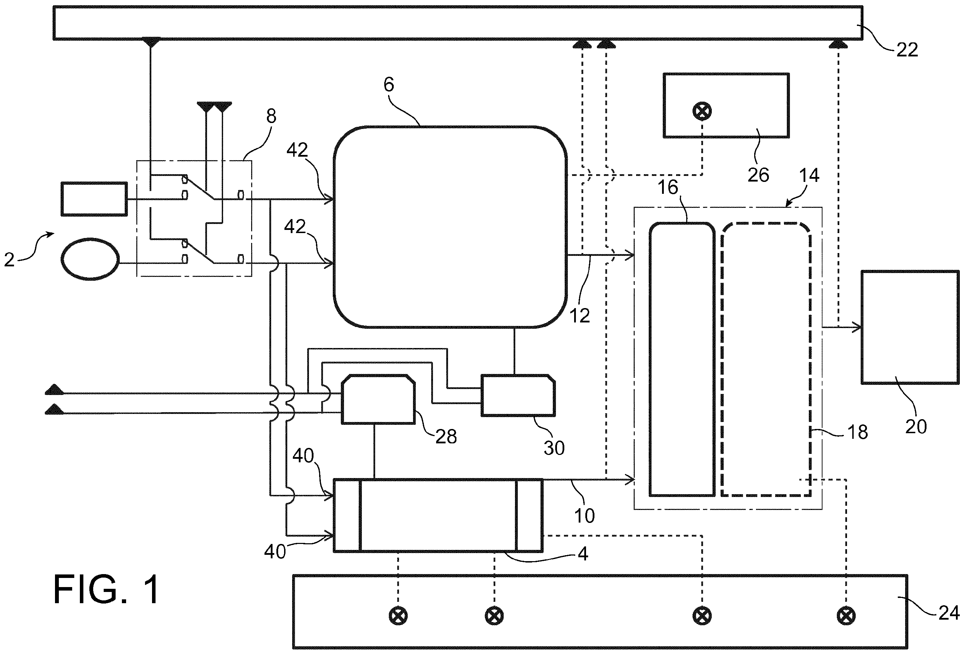

D'autres caractéristiques et avantages de l'invention ressortiront de la description qui va suivre, prise à titre d'exemple non limitatif, en référence à la figure 1 illustrant schématiquement un mode préféré de réalisation du système de sécurité automatisé selon l'invention.

### EXPOSÉ DÉTAILLÉ DE MODES DE RÉALISATION PARTICULIERS

La figure 1 représente une architecture permettant d'avoir une diversité technologique entre un traitement programmé par logiciel et un traitement non programmé par logiciel. Cette diversité est particulièrement requise pour assurer la sécurité des installations nucléaire en vue de s'affranchir des défauts dits de mode commun entre deux technologies.

L'architecture illustrée par la figure 1 comporte une pluralité de capteurs distincts 2 destinés à prélever des informations tout ou rien ou des mesures de grandeurs physiques telles que par exemple une température, une pression ou tout autre grandeur mesurées dans un processus industriel. Afin d'éviter des défaillances de cause commune, les différents capteurs sont issus de technologies différentes ou de constructeurs différents et mettent en œuvre des principes de mesures différents. Par exemple, certains capteurs peuvent mesurer des impulsions représentatives des variations de la grandeur physique tandis que d'autres mesurent des valeurs analogiques représentatives des variations de cette grandeur physique.

Préférentiellement que le système de la figure 1 présente une diversité technologique tout au long de la chaine de mesure. Cette diversité technologique concerne les capteurs, les alimentations électriques des unités de traitements et les programmes applicatifs mis en œuvre pour assurer la sécurité de l'installation.

Comme illustré par la figure 1, le système comporte deux chaines de traitement parallèles. Une première chaine de traitement comportant une première unité de traitement 4, et une deuxième chaine de traitement comporte une deuxième unité de traitement 6. La première unité de traitement 4 est un circuit à relais et/ou un circuit analogique tandis que la deuxième unité 6 est un automate programmable.

Chacune des unités de traitement 4 et 6 est reliée à un ou à plusieurs capteurs 2 via un organe d'aiguillage 8. Les sorties 10, 12 respectivement des unités de traitement 4, 6 sont reliées à un module de décision 14 comportant un module de vote 16 et un module de détection d'incohérence 18 entre les réponses des unités de traitement 4, 6. La sortie du module de vote 14 est reliée à un actionneur 20.

Dans un mode préféré de réalisation de l'invention, le système comporte en outre un module de test 22 indépendant des chaines de traitement 4 et 6, adapté pour remplacer périodiquement, à l'entrées de chaque unité traitement, les signaux de mesures délivrés par les capteurs 2 par des signaux de test, et à comparer les réponses délivrées aux sorties 10 et 12, respectivement des unités de traitement 4 et 6, à des signaux types préenregistrés. En outre, la première chaine de traitement 4 comporte un panneau de diagnostic non numérique 24 et la deuxième chaine de traitement 6 comporte un panneau de diagnostic numérique 26. Le module de test 22 réalise périodiquement le test de cohérence sans que le système soit informé du fait qu'il est sous test.

Les unités de traitement 4, 6 sont alimentées respectivement par une première source d'alimentation 28 et par une deuxième source d'alimentation 30. Afin d'éviter des défaillances de cause commune, les sources d'alimentation 28 et 30 sont également issus de technologies différentes ou de constructeurs différents.

En fonctionnement, la première unité de traitement 4 réalise les traitements applicatifs à base de technologies conventionnelles, non numériques, c'est-à-dire ne comportant pas de logiciel et la deuxième unité de traitement 6 réalise les traitements applicatifs programmables. Les traitements applicatifs comportent :
- des tâches de surveillance de bon fonctionnement des organes de traitement numérique de l'automate programmable tel que la mémoire,
- des tâches chien de garde qui, en cas de sollicitation des taches de surveillance, positionnent les sorties de l'automate programmable dans une position prédéterminée et connue à l'avance. Cette position prédéterminée est par exemple une position sûre de tout ou partie des sorties.
- Une tâche de signalisation du passage en test ou non. Cette information est transmise par l'automate programmable à partir d'une entrée tout ou rien qui est une image de la position de l'organe d'aiguillage. Ainsi « Position test » correspond à « information activée », « position non test » correspond à « information désactivée ». Le reflet de cette information est transmis sur le panneau de diagnostic conventionnel 24 et sur le panneau de diagnostic numérique 26.
- une tâche de respect du temps de cycle réalisée par un logiciel pour contrôler le non dépassement du temps de cycle de traitement numérique de l'automate programmable.

Le module de décision 16 est alimenté par une alimentation à haute disponibilité qui est réalisée à partir de deux alimentations par exemple. Ce module de décision 16 réalise le vote entre les sorties des unités de traitement conventionnelle 4 et numérique 6 en fonction de la comparaison des réponses délivrées aux sortie 10 et 12, à des signaux types préenregistrés.

Les unités de traitement 4 et 6 délivrent une information de bon fonctionnement au module de test 22 et respectivement aux panneaux de diagnostic 24 et 26 si les différentes tâches de surveillance, de test et de sécurité ne détectent pas de dysfonctionnement.

Le module de test 22 réalise les tests de l'architecture pour garantir qu'elle est opérationnelle et qu'aucun défaut n'est détecté au travers des résultats de test mesurés en sortie des unités de traitement conventionnelle 4 et numérique 6. Pour cela, le module de test 22 injecte les signaux de test aux entrées 40 et 42 respectivement des unités de traitement conventionnelle 4 et numérique 6 via l'organe d'aiguillage 8, et les compare aux signaux délivrés par le module de vote 16 à l'actionneur 20.

Le système selon l'invention, permet d'obtenir une résistance aux défauts de mode commun au moyen d'une architecture compacte dans laquelle les fonctions critiques qui sont normalement réalisées par l'automate programmable sont réalisées en double technologie une en traitement programmée et une autre à relais. Ainsi le volume et la fiabilité globale des équipements sont améliorés. En outre, une alarme peut être activée en cas d'incohérence, entre les signaux délivrés à l'actionneur par les unités de traitements 4 et 6.

## Revendications

1. Système de sécurité automatisé d'une installation industrielle comportant une pluralité de capteurs (2) destinés à prélever des mesures d'un processus industriel, une pluralité d'actionneurs (20) destinés à exécuter des opérations qui dépendent de signaux de mesure délivrés par lesdits capteurs (2), au moins une première chaine de traitement et au moins une deuxième chaine de traitement reliant les capteurs (2) et les actionneurs (20), la première chaine de traitement (4) comporte au moins une première unité de traitement (4) mettant en œuvre une première technologie tandis que la deuxième chaine de traitement comporte au moins une deuxième unité de traitement (6) mettant en œuvre une deuxième technologie différente de la première technologie de manière à assurer une redondance partielle d'au moins une fonction critique de sécurité de l'installation industrielle, **caractérisé en ce qu'**il comporte au moins un module de test (22) indépendant desdites première et deuxième chaines de traitement adapté pour substituer des signaux de test aux signaux de mesures délivrés par les capteurs (2), et pour comparer les réponses délivrées aux sorties (10) et (12), respectivement des première et deuxième unités de traitement (4) et (6), à des signaux types préenregistrés.

2. Système selon la revendication 1 dans lequel la première unité de traitement (4) est un circuit à relais (4) tandis la deuxième unité de traitement est un automate industriel programmable (6).

3. Système selon la revendication 1 dans lequel la première unité de traitement (4) est un circuit analogique tandis la deuxième unité de traitement est un automate industriel programmable (6).

4. Système selon la revendication 3 comportant en outre un module de décision (14) comportant un module de vote (16) et un module de détection d'incohérence (18) entre les réponses des unités de traitement (4) et (6), ledit module de vote (16) étant adapté pour sélectionner, en fonction du résultat du module de détection d'incohérence (18), soit des signaux de mesure délivrés à la sortie de la première unité de traitement (4), soit des signaux de mesure délivrés à la sortie de la deuxième unité de traitement (6).

5. Système selon la revendication 4 dans lequel la première chaine de traitement comporte un panneau de diagnostic non numérique (24) et la deuxième chaine de traitement comporte un panneau de diagnostic numérique (26).

## Patentansprüche

1. Automatisiertes Sicherheitssystem einer Industrieanlage, enthaltend eine Mehrzahl von Sensoren (2), die dazu bestimmt sind, Messungen von einem industriellen Prozess durchzuführen, eine Mehrzahl von Betätigungsgliedern (20), die dazu bestimmt sind, Operationen auszuführen, die von Messsignalen abhängen, die von den Sensoren (2) geliefert werden, zumindest eine erste Verarbeitungskette und zumindest eine zweite Verarbeitungskette, die die Sensoren (2) und die Betätigungsglieder (20) verbinden, wobei die erste Verarbeitungskette zumindest eine erste Verarbeitungseinheit (4) enthält, die eine erste Technologie verwendet, während die zweite Verarbeitungskette zumindest eine zweite Verarbeitungseinheit (6) enthält, die eine zweite Technologie verwendet, die sich von der ersten Technologie unterscheidet, um eine teilweise Redundanz zumindest einer kritischen Sicherheitsfunktion der Industrieanlage zu gewährleisten, **dadurch gekennzeichnet, dass** es zumindest ein von der ersten und zweiten Verarbeitungskette unabhängiges Testmodul (22) enthält, das dazu geeignet ist, Testsignale für die von den Sensoren (2) gelieferten Messsignale zu ersetzen und die an den Ausgängen (10) und (12) der ersten bzw. zweiten Verarbeitungseinheit (4) und (6) gelieferten Reaktionen mit zuvor aufgezeichneten Standardsignalen zu vergleichen.

2. System nach Anspruch 1, wobei die erste Verarbeitungseinheit (1) eine Relaisschaltung (4) ist, während die zweite Verarbeitungseinheit eine speicherprogrammierbare Steuerung (6) ist.

3. System nach Anspruch 1, wobei die erste Verarbeitungseinheit (4) eine analoge Schaltung ist, während die zweite Verarbeitungseinheit eine speicherprogrammierbare Steuerung (6) ist.

4. System nach Anspruch 3, ferner enthaltend ein Entscheidungsmodul (14), das ein Auswahlmodul (16) und ein Inkohärenzerkennungsmodul (18) zum Erkennen einer Inkohärenz zwischen den Reaktionen der Verarbeitungseinheiten (4) und (6) enthält, wobei das Auswahlmodul (16) dazu geeignet ist, um abhängig vom Ergebnis des Inkohärenzerkennungsmoduls (18) entweder Messsignale, die am Ausgang der ersten Verarbeitungseinheit (4) geliefert werden, oder Messsignale, die am Ausgang der zweiten Verarbeitungseinheit (6) geliefert werden, auszuwählen.

5. System nach Anspruch 4, wobei die erste Verarbeitungskette ein nichtdigitales Diagnosepanel (24) enthält und die zweite Verarbeitungskette ein digitales Diagnosepanel (26) enthält.

## Claims

1. An automated safety system of an industrial facility including a plurality of sensors (2) for taking measurements of an industrial process, a plurality of actuators (20) for executing operations which depend on measurement signals delivered by said sensors (2), at least one first treatment line and at least one second treatment line linking the sensors (2) and the actuators (20), the first treatment line (4) includes at least one first treatment unit (4) implementing a first technology whereas the second treatment line includes at least one second treatment unit (6) implementing a second technology different from the first technology so as to provide a partial redundancy of at least one critical safety function of the industrial facility, **characterised in that** it includes at least one independent testing module (22) of said first and second treatment lines adapted to substitute test signals for the measurement signals delivered by the sensors (2), and to compare the responses delivered at the outputs (10) and (12), respectively of the first and second treatment units (4) and (6), with pre-registered standard signals.

2. The system according to claim 1, wherein the first treatment unit (4) is a relay circuit (4) whereas the second treatment unit is a programmable industrial automaton (6).

3. The system according to claim 1, wherein the first treatment unit (4) is an analogue circuit whereas the second treatment unit is a programmable industrial automaton (6).

4. The system according to claim 3, further including a decision module (14) including a voting module (16) and an inconsistency detection module (18) between the responses of the treatment units (4) and (6), said voting module (16) being adapted to select, as a function of the result of the inconsistency detection module (18), either measurement signals delivered at the output of the first treatment unit (4), or measurement signals delivered at the output of the second treatment unit (6).

5. The system according to claim 4, wherein the first treatment line includes a non-digital diagnostic panel (24) and the second treatment line includes a digital diagnostic panel (26).
